# EUROPEAN PATENT APPLICATION

(11) **EP 3 081 588 A1**
(43) Date of publication of application: **19.10.2016**
(21) Application number: 14877883.0
(22) Date of filing: 08.12.2014
(51) Int. Cl.: C08L 21/00, B60C 1/00, B60C 5/14, C08K 3/04, C08K 3/26, C08K 3/34, C08L 81/04

(54) **PNEUMATIC TIRE**

(30) Priority: 08.01.2014 JP 2014001833
(71) Applicant: Sumitomo Rubber Industries, Ltd., Kobe-shi, Hyogo 651-0072 (JP)
(72) Inventor: MIYAZAKI Tatsuya, Kobe-shi Hyogo 651-0072 (JP)
(74) Representative: Manitz, Finsterwald & Partner GbR
(86) International application number: PCT/JP2014/082374
(87) International publication number: WO 2015/104932

(57) **Abstract**

Provided is a pneumatic tire including a tire inner layer which achieves a balanced improvement in steering response, fuel economy, durability, and extrusion processability. Included is a pneumatic tire including a tire inner layer, the tire inner layer including a rubber composition that contains a rubber component, a carbon black, and an alkylphenol-sulfur chloride condensate, the carbon black having a BET specific surface area of 20-120 m²/g, the rubber composition containing, per 100 parts by mass of the rubber component, 40-100 parts by mass of the carbon black and 2.5-10 parts by mass of the alkylphenol-sulfur chloride condensate, the rubber composition having an amount of low reinforcing inorganic filler of not more than 40 parts by mass per 100 parts by mass of the rubber component and an amount of reactive phenolic resin of less than 2.0 parts by mass per 100 parts by mass of the rubber component.

## Description

### TECHNICAL FIELD

The present invention relates to a pneumatic tire. Specifically, the present invention relates to a pneumatic tire including a tire inner layer that includes a rubber composition.

### BACKGROUND ART

Conventional rubber compositions for tire bead apexes have been designed especially to increase the complex elastic modulus (E*) and improve the handling stability such as steering response. However, even if the handling stability is improved, in the case of driving with tires for sport utility vehicles (SUVs) or driving at cold temperatures, deformation strain, i.e. a flat spot, is stored in the bead apexes of the tires until the tire temperature is increased after the vehicle stops for a certain period of time and restarts running. As a result, the fuel economy deteriorates. The occurrence of such a flat spot can be effectively prevented by reducing the tan δ.

A method is known for increasing the E* by adding 1,2-syndiotactic polybutadiene (SPB) crystals. In this case, however, the tan δ tends to increase and the fuel economy tends to deteriorate. Moreover, methods are known for reducing the tan δ by using carbon black having a comparatively large particle size, such as N550, by reducing the amount of filler such as carbon black, or by reducing the amount of oil. In these cases, however, the E* tends to decrease and the handling stability tends to deteriorate. These methods can cause other problems. For example, the extrusion processability can deteriorate so that the rubber shape can easily change with time or the extruded rubber may not have smooth edges. Thus, the handling stability, fuel economy, and extrusion processability are conflicting properties, and it is difficult to achieve a balanced improvement in these properties.

As a technique to solve these problems, Patent Literature 1 discloses incorporation of a (modified) phenol resin and sulfur into a rubber component including natural rubber and the like.

### CITATION LIST

### PATENT LITERATURE

Patent Literature 1: JP 2007-302865 A

### SUMMARY OF INVENTION

### TECHNICAL PROBLEM

Although developments are being made to achieve a balanced improvement in handling stability, fuel economy, and extrusion processability as described above, further improvement is desired. Moreover, if suitability for shock-absorbing dampers for vehicles is desired for higher steering response, the tan δ needs to be further reduced. Thus, there is room for improvement to achieve a balanced improvement in steering response, fuel economy, and extrusion processability while further reducing the tan δ.

The present invention aims to solve the above problems and provide a pneumatic tire including a tire inner layer which achieves a balanced improvement in steering response, fuel economy, durability, and extrusion processability.

### SOLUTION TO PROBLEM

The present invention relates to a pneumatic tire, including a tire inner layer,
the tire inner layer including a rubber composition that contains a rubber component, a carbon black, and an alkylphenol-sulfur chloride condensate,
the carbon black having a BET specific surface area of 20 to 120 m²/g,
the rubber composition containing, per 100 parts by mass of the rubber component, 40 to 100 parts by mass of the carbon black and 2.5 to 10 parts by mass of the alkylphenol-sulfur chloride condensate,
the rubber composition having an amount of low reinforcing inorganic filler of not more than 40 parts by mass per 100 parts by mass of the rubber component and an amount of reactive phenolic resin of less than 2.0 parts by mass per 100 parts by mass of the rubber component.

The low reinforcing inorganic filler preferably has an average particle size of not more than 50 µm.

The rubber composition preferably contains 3.0 to 8.0 parts by mass of the alkylphenol-sulfur chloride condensate per 100 parts by mass of the rubber component.

The low reinforcing inorganic filler is preferably at least one selected from the group consisting of calcium carbonate, hard clay, and talc.

A press vulcanizate obtained by press-vulcanizing the rubber composition at 170°C for 12 minutes preferably has a tan δ at 70°C of not more than 0.10.

The carbon black preferably has a BET specific surface area of 30 to 80 m²/g.

The rubber composition preferably contains 70 to 90 parts by mass of the carbon black per 100 parts by mass of the rubber component.

The tire inner layer is preferably at least one component selected from the group consisting of a bead apex, an innerliner, a bead inner layer, and an inner sidewall layer.

### ADVANTAGEOUS EFFECTS OF INVENTION

The rubber composition according to the present invention contains specific amounts of a rubber component, a carbon black having a certain BET specific surface area, and an alkylphenol-sulfur chloride condensate but contains only a specific amount or less of a low reinforcing inorganic filler and only less than a specific amount of a reactive phenolic resin. Such a rubber composition achieves a balanced improvement in steering response, fuel economy, durability, and extrusion processability while reducing the tan δ. Therefore, a pneumatic tire including a tire inner layer that includes the rubber composition achieves a balanced improvement in steering response, fuel economy, and durability.

### BRIEF DESCRIPTION OF DRAWINGS

Fig. 1 shows an exemplary schematic cross-section of a tire.
Fig. 2 shows an exemplary schematic cross-section of a tire.
Fig. 3 shows an exemplary schematic cross-section of a tire.
Fig. 4 shows an exemplary schematic cross-section of a tire.
Fig. 5 shows an exemplary schematic cross-section of a tire.
Fig. 6 shows an exemplary schematic cross-section of a tire.

### DESCRIPTION OF EMBODIMENTS

The rubber composition in the present invention contains a rubber component.

The rubber component may include diene rubbers, such as natural rubber (NR), polyisoprene rubber (IR), polybutadiene rubber (BR), styrene-butadiene rubber (SBR), acrylonitrile butadiene rubber (NBR), chloroprene rubber (CR), or butyl rubber (IIR). Preferred among these are NR, IR, BR, and SBR because they can improve steering response, fuel economy, durability, and extrusion processability well. More preferred are NR alone, a combination of NR and BR, a combination of NR and SBR, a combination of NR, BR, and SBR, and a combination of NR, IR, and SBR. Still more preferred are a combination of NR and SBR and a combination of NR, BR, and SBR.

The NR is not particularly limited, and those generally used in the rubber industry may be used. Examples include RSS#3, TSR20, and UPNR.

Examples of the BR include, but are not limited to, high-cis BR, modified polybutadiene rubber, and BR containing 1,2-syndiotactic polybutadiene crystals (SPB-containing high-cis BR). Preferred among these is high-cis BR or SPB-containing high-cis BR because they can increase the E*.

The high-cis BR refers to a polybutadiene rubber having a cis-1,4-butadiene content of not less than 90%.

The cis content of the high-cis BR can be measured using a JNM-ECA series NMR device available from JEOL Ltd.

When SPB-containing high-cis BR is used, the SPB-containing high-cis BR preferably has an SPB content of not less than 8% by mass, more preferably not less than 12% by mass. When the SPB content is less than 8% by mas, the effect of improving extrusion processability may be insufficient. The SPB content is preferably not more than 20% by mass, more preferably not more than 18% by mass. An SPB content of more than 20% by mass tends to deteriorate extrusion processability.

The SPB content of the SPB-containing high-cis BR is expressed as the amount of boiling n-hexane-insoluble matter.

The 1,2-syndiotactic polybutadiene crystals in the SPB-containing high-cis BR preferably have a melting point of not lower than 180°C, more preferably not lower than 190°C. When the melting point is lower than 180 °C, the 1, 2-syndiotactic polybutadiene crystals may melt during rubber kneading, thereby resulting in reduced stiffness. The melting point is also preferably not higher than 220°C, more preferably not higher than 210°C. When the melting point is higher than 220°C, the dispersibility of the crystals in the rubber composition tends to deteriorate.

The SPB-containing high-cis BR preferably has a cis content of not less than 90% by mass, more preferably not less than 93% by mass, still more preferably not less than 95% by mass. A cis content of less than 90% by mass may lead to reduction in abrasion resistance or elongation at break.

The cis content of the SPB-containing high-cis BR can be measured as described for the cis content of the high-cis BR.

Examples of the SBR include, but are not limited to, emulsion-polymerized styrene-butadiene rubber (E-SBR) and solution-polymerized styrene-butadiene rubber (S-SBR). Preferred among these is E-SBR because it allows for good dispersion of carbon black and provides good processability.

The SBR preferably has a styrene content of not less than 10% by mass, more preferably not less than 20% by mass. A styrene content of less than 10% by mass tends to lead to insufficient hardness. The styrene content is also preferably not more than 40% by mass, more preferably not more than 30% by mass. A styrene content of more than 40% by mass tends to lead to reduced fuel economy.

The amount of NR based on 100% by mass of the rubber component is preferably not less than 20% by mass, more preferably not less than 30% by mass, still more preferably not less than 40% by mass. When the amount is less than 20% by mass, the elongation at break tends to deteriorate. In addition, sufficient processability may not be obtained. The upper limit of the amount of NR is not particularly limited, and in another suitable embodiment, the amount of NR is 100% by mass.

The amount of BR based on 100% by mass of the rubber component is preferably not less than 5% by mass, more preferably not less than 15% by mass. An amount of less than 5% by mass may not ensure sufficient durability. The amount of BR is preferably not more than 50% by mass, more preferably not more than 30% by mass. An amount of more than 50% by mass tends to deteriorate extrusion processability or elongation at break.

The amount of SBR based on 100% by mass of the rubber component is preferably not less than 15% by mass, more preferably not less than 20% by mass, still more preferably not less than 25% by mass. An amount of less than 15% by mass may not provide sufficient steering response, and may not provide sufficient reversion resistance, thereby failing to sufficiently improving extrusion processability. In addition, sufficient hardness may not be obtained. The amount of SBR is preferably not more than 60% by mass, more preferably not more than 50% by mass, still more preferably not more than 40% by mass. An amount of more than 60% by mass tends to deteriorate fuel economy.

The rubber composition in the present invention contains a carbon black having a certain BET specific surface area.

The BET specific surface area of the carbon black is not less than 20 m²/g, preferably not less than 25 m²/g, more preferably not less than 30 m²/g, still more preferably not less than 40 m²/g. A carbon black having a BET specific surface area of less than 20 m²/g may not provide a sufficient reinforcing effect and may not sufficiently improve steering response, either. The BET specific surface area is not more than 120 m²/g, preferably not more than 110 m²/g, more preferably not more than 100 m²/g, still more preferably not more than 80 m²/g, particularly preferably not more than 75 m²/g. When the BET specific surface area is more than 120 m²/g, the tan δ may not be reduced sufficiently and the fuel economy tends to deteriorate. In addition, the steering response or durability tends to be reduced.

As used herein, the BET specific surface area of the carbon black is determined in accordance with JIS K 6217-2 : 2001.

The COAN (compressed oil absorption number) of the carbon black is preferably not less than 50 ml/100 g, more preferably not less than 75 ml/100 g. A carbon black having a COAN of less than 50 ml/100 g may not provide a sufficient reinforcing effect and may not sufficiently improve steering response, either. The COAN is preferably not more than 110 ml/100 g, more preferably not more than 105 ml/100 g, still more preferably not more than 90 ml/100 g. A COAN of more than 110 ml/100 g tends to lead to deteriorated fuel economy and reduced processability.

As used herein, the COAN of the carbon black is measured in accordance with JIS K 6217-4:2001. The oil used here is dibutyl phthalate (DBP).

The carbon black can be produced by conventionally known methods such as the furnace process or channel process.

The amount of the carbon black per 100 parts by mass of the rubber component is not less than 40 parts by mass, preferably not less than 55 parts by mass, more preferably not less than 65 parts by mass, still more preferably not less than 70 parts by mass. An amount of less than 40 parts by mass may not sufficiently improve steering response or durability. In addition, the extrusion processability tends to deteriorate. The amount of the carbon black is not more than 100 parts by mass, preferably not more than 90 parts by mass, more preferably not more than 87 parts by mass, still more preferably not more than 85 parts by mass, particularly preferably not more than 80 parts by mass. When the amount is more than 100 parts by mass, the carbon black may have reduced dispersibility, which may make it impossible to sufficiently reduce the tan δ, thereby resulting in insufficient fuel economy. In addition, the steering response or durability tends to be reduced; furthermore, the heat build-up during extrusion tends to increase so that scorch can easily occur, and the extrusion processability tends to deteriorate.

In the rubber composition in the present invention, the amount of low reinforcing inorganic filler is not more than 40 parts by mass per 100 parts by mass of the rubber component. When the amount of low reinforcing inorganic filler falls within such a range, the tan δ can be sufficiently reduced, and good elongation at break can also be obtained. The amount of low reinforcing inorganic filler is preferably not more than 30 parts by mass, more preferably not more than 25 parts by mass, still more preferably not more than 22 parts by mass per 100 parts by mass of the rubber component.

The amount of low reinforcing inorganic filler, if used, is preferably not less than 1.0 part by mass, more preferably not less than 5. 0 parts by mass, still more preferably not less than 10 parts by mass, particularly preferably not less than 12 parts by mass per 100 parts by mass of the rubber component. An amount of less than 1.0 part by mass may not provide sufficient extrusion processability.

The low reinforcing inorganic filler needs to have a moderate Mohs hardness so that it can be ground or dispersed during rubber kneading and further so as to prevent the kneader or extruder from wearing excessively. The Mohs hardness of the low reinforcing inorganic filler is preferably not more than 7, more preferably not more than 5. The lower limit of the Mohs hardness is 1.

The Mohs hardness, which is one of mechanical properties of materials, is a measure generally used through the ages in mineral-related fields, and is measured by scratching a material to be analyzed for hardness with a reference material, and observing the presence or absence of scratches.

Specific examples of the low reinforcing inorganic filler include calcium carbonate, talc, hard clay, Austin black, fly ash, and mica. Preferred among these are calcium carbonate, talc, and hard clay because they are less likely to act as rupture nuclei during running due to their low self-aggregation properties, thereby resulting in good durability, and also because they have a large effect in improving extrusion processability. Particularly in view of processability, calcium carbonate or talc is more preferred. In view of steering response, on the other hand, calcium carbonate or hard clay is more preferred. In a particularly preferred embodiment, the low reinforcing inorganic filler is calcium carbonate.

The calcium carbonate has a Mohs hardness of 3, and it is presumed that the calcium carbonate produces such excellent effects by acting similarly to the SPB contained in SPB-containing high-cis BR.

The low reinforcing inorganic filler preferably has an average particle size (average primary particle size) of not more than 50 µm, more preferably not more than 30 µm. A low reinforcing inorganic filler having an average particle size of more than 50 µm is likely to act as rupture nuclei during running and thereby tends to deteriorate durability. The average particle size of the low reinforcing inorganic filler is preferably not less than 0.5 µm, more preferably not less than 1 µm, still more preferably not less than 2 µm. A low reinforcing inorganic filler having an average particle size of less than 0.5 µm may not sufficiently improve extrusion processability.

As used herein, the average particle size of the low reinforcing inorganic filler is measured by a laser diffraction/scattering method (Microtrac method).

The combined amount of the carbon black and the low reinforcing inorganic filler, per 100 parts by mass of the rubber component, is preferably not less than 50 parts by mass, more preferably not less than 70 parts by mass. The combined amount is also preferably not more than 120 parts by mass, more preferably not more than 110 parts by mass. When the combined amount falls within the above-described range, a high-level balanced improvement in steering response, fuel economy, durability, and extrusion processability can be achieved.

The rubber composition in the present invention may contain silica, but its use is not so desirable because silica can cause uneven shrinkage of the extruded sheet or extrudate. The amount of silica, if used, is in the same range as described for the low reinforcing inorganic filler.

The rubber composition in the present invention contains an alkylphenol-sulfur chloride condensate.

The alkylphenol-sulfur chloride condensate may suitably be a compound represented by the following formula (1): 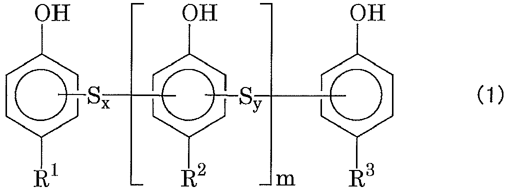 wherein R¹, R², and R³ are the same as or different from one another, and each represent a C4-C12 alkyl group, x and y are the same as or different from one another, and each represent an integer of 2 to 4, and m represents an integer of 0 to 500. When the alkylphenol-sulfur chloride condensate is incorporated together with the carbon black having a certain BET specific surface area, a crosslinked structure more thermally stable than usual sulfur crosslinking will be formed enabling a balanced improvement in steering response, fuel economy, durability, and extrusion processability. Compared to other crosslinking agents such as PERKALINK 900 (1,3-bis(citraconimidomethyl)benzene) or DURALINK HTS (sodium hexamethylene-1,6-bisthiosulfate dihydrate) both available from Flexsys, the alkylphenol-sulfur chloride condensate is more effective in improving properties, and in particular, it can increase the E*, thereby greatly improving steering response.

For good dispersion of the alkylphenol-sulfur chloride condensate in the rubber component, m in the formula (1) is preferably an integer of 10 to 400, more preferably 42 to 300. In order to efficiently achieve high hardness (or inhibit reversion), x and y each represent an integer of 2 to 4, preferably both 2. For good dispersion of the alkylphenol-sulfur chloride condensate in the rubber component, R¹ to R³ each represent a C4-C12 alkyl group, preferably a C6-C12 alkyl group, more preferably a C8-C12 alkyl group.

The alkylphenol-sulfur chloride condensate preferably has a weight average molecular weight (Mw) of 8,000 to 100, 000, more preferably 9,000 to 80,000, still more preferably 10,000 to 70,000, particularly preferably 11,000 to 59,000. An alkylphenol-sulfur chloride condensate having a Mw of less than 8,000 may provide insufficient elongation at break and poor adhesion. An alkylphenol-sulfur chloride condensate having a Mw of more than 100,000 tends to have a softening point higher than 130°C, resulting in deterioration in the dispersibility, and may reduce production efficiency or elongation at break.

The weight average molecular weight (Mw) of the alkylphenol-sulfur chloride condensate can be measured by a gel permeation chromatograph (GPC) (GPC-8000 series available from Tosoh Corporation, detector: differential refractometer, column: TSKGEL SUPERMALTPORE HZ-M available from Tosoh Corporation) using polystyrene standards.

The alkylphenol-sulfur chloride condensate preferably has a softening point of 60°C to 127°C, more preferably 80°C to 127°C, still more preferably 85°C to 125°C, particularly preferably 90°C to 120°C. When the softening point is outside the above range, the dispersibility of the alkylphenol-sulfur chloride condensate tends to deteriorate. When the softening point falls within the above-described range, the effects of the present invention can be more suitably achieved.

The softening point of the alkylphenol-sulfur chloride condensate is measured as set forth in JIS K 6220-1:2001 using a ring and ball softening point measuring apparatus and the temperature at which a ball drops is defined as the softening point.

The alkylphenol-sulfur chloride condensate can be prepared by known methods, and non-limiting examples include a method in which an alkylphenol and sulfur chloride are reacted at a molar ratio of 1:0.9 to 1.25, for example.

Specific examples of the alkylphenol-sulfur chloride condensate include Tackirol V200, which is a compound represented by the formula (1a) below, TS3108, TS3109, and TS3101, all available from Taoka Chemical Co. , Ltd. , and Vultac 3 available from Arkema.

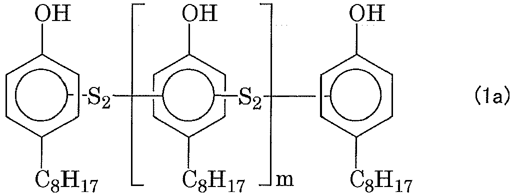

In the formula (1a), m represents an integer of 0 to 100.

The amount of the alkylphenol-sulfur chloride condensate per 100 parts by mass of the rubber component is not less than 2.5 parts by mass, preferably not less than 3.0 parts by mass, more preferably not less than 4.0 parts by mass. If the amount is less than 2.5 parts by mass, the alkylphenol-sulfur chloride condensate may not sufficiently produce its effects. The amount of the alkylphenol-sulfur chloride condensate is not more than 10 parts by mass, preferably not more than 9.0 parts by mass, more preferably not more than 8.0 parts by mass, still more preferably not more than 7.0 parts by mass, particularly preferably not more than 6.0 parts by mass. An amount of more than 10 parts by mass may lead to reduction in elongation at break. When the amount of the alkylphenol-sulfur chloride condensate falls within the above-described range, a balanced improvement in steering response and fuel economy can be achieved even when the amount of reactive phenolic resin is less than 2.0 parts by mass, which will be described below.

In the rubber composition in the present invention, the amount of reactive phenolic resin is less than 2.0 parts by mass per 100 parts by mass of the rubber component. When the amount of reactive phenolic resin falls within such a range, the tan δ can be reduced sufficiently to provide good fuel economy and good steering response. The amount of reactive phenolic resin per 100 parts by mass of the rubber component is preferably less than 1.5 parts by mass, more preferably less than 1.0 part by mass, most preferably 0 parts by mass (substantially free of any reactive phenolic resin).

As described below, in cases where the reactive phenolic resin includes a phenol resin and/or a modified phenol resin, the amount of reactive phenolic resin refers to the combined amount of the phenol resin and modified phenol resin in the rubber composition.

Examples of the reactive phenolic resin include phenol resins, modified phenol resins, cresol resins, and modified cresol resins. The phenol resin refers to one obtained by condensation reaction of a phenol such as phenol with an aldehyde such as formaldehyde, acetaldehyde, or furfural in the presence of an acid or alkali catalyst. The modified phenol resin refers to a phenol resin modified with a compound such as cashew oil, tall oil, flaxseed oil, animal or vegetable oils, unsaturated fatty acids, rosin, alkylbenzene resins, aniline, or melamine.

The reactive phenolic resin, if used, preferably includes a phenol resin and/or a modified phenol resin. In particular, the reactive phenolic resin is more preferably a modified phenol resin because the use of such a resin provides sufficient hardness by the curing reaction, resulting in hard composite spheres, or results in large composite spheres. The reactive phenolic resin is still more preferably a cashew oil-modified phenol resin or a rosin-modified phenol resin.

Suitable examples of the cashew oil-modified phenol resin include those represented by the following formula (2): 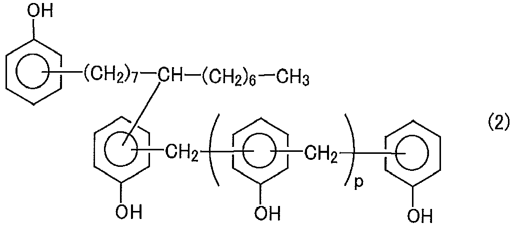 wherein p represents an integer of 1 to 9, preferably 5 or 6, for good reactivity and improved dispersibility.

Apart from the reactive phenolic resin, the rubber composition in the present invention preferably includes a non-reactive alkylphenol resin. The non-reactive alkylphenol resin provides good adhesion and high E*. Further, since the non-reactive alkylphenol resin is highly compatible with phenol resins and modified phenol resins, when a phenol resin and/or a modified phenol resin are/is used as the reactive phenolic resin, the non-reactive alkylphenol resin suppresses softening of composite spheres formed from the reactive phenolic resin and filler, thereby reducing the deterioration in steering response.

The term "non-reactive alkylphenol resin" refers to an alkylphenol resin which has no reactivity at sites ortho and para (especially para) to the hydroxyl groups of the benzene rings in the chain. Suitable examples of the non-reactive alkylphenol resin include those represented by the following formulas (3) and (4): 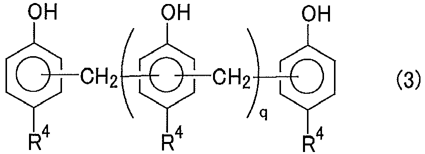 wherein q represents an integer, and is preferably 1 to 10, more preferably 2 to 9, for moderate blooming properties, and each R⁴ is the same as or different from one another and represents an alkyl group, and is preferably a C4-C15, more preferably C6-C10, alkyl group for compatibility with rubber; 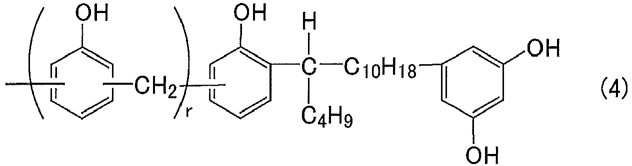 wherein r represents an integer, and is preferably 1 to 10, more preferably 2 to 9, for moderate blooming properties.

The amount of non-reactive alkylphenol resin per 100 parts by mass of the rubber component is preferably not less than 0.5 parts by mass, more preferably not less than 1.0 part by mass. An amount of less than 0.5 parts by mass may lead to insufficient adhesion. The amount of non-reactive alkylphenol resin is preferably not more than 5.0 parts by mass, more preferably not more than 3.0 parts by mass. An amount of more than 5.0 parts by mass tends to deteriorate fuel economy. In addition, sufficient hardness may not be obtained.

When the rubber composition in the present invention includes the reactive phenolic resin, it usually contains a curing agent that has an ability to cure the reactive phenolic resin. In this case, in addition to a three-dimensional cross-linked network formed from the reactive phenolic resin independently from a cross-linked network of polymer chains, composite spheres formed from the reactive phenolic resin and filler are formed, and therefore the effects of the present invention can be well achieved. The curing agent is not particularly limited, provided that it has the curing ability described above. Examples include hexamethylenetetramine (HMT), hexamethoxymethylol melamine (HMMM), hexamethylol melamine pentamethyl ether (HMMPME), melamine, and methylol melamine. Preferred among these are HMT, HMMM, and HMMPME because they have higher ability to increase the hardness of the reactive phenolic resin.

The amount of the curing agent per 100 parts by mass of the reactive phenolic resin is preferably not less than 1.0 part by mass, more preferably not less than 5.0 parts by mass. An amount of less than 1.0 part by mass may lead to insufficient curing. The amount of the curing agent is preferably not more than 20 parts by mass, more preferably not more than 15 parts by mass. An amount of more than 20 parts by mass may lead to uneven curing or scorch during extrusion.

In addition to the aforementioned components, the rubber composition in the present invention may optionally incorporate compounding ingredients conventionally used in the rubber industry, such as oil, stearic acid, antioxidants of various types, zinc oxide, sulfur, vulcanization accelerators, and retardants.

According to the invention, excellent extrusion processability is achieved, without incorporating any oil, by the features of the rubber composition in the present invention. Therefore, the amount of oil can be reduced, and high levels of fuel economy and steering response can be achieved. The amount of oil per 100 parts by mass of the rubber component is preferably not more than 5.0 parts by mass, more preferably not more than 1.0 part by mass, still more preferably 0 parts by mass (substantially oil-free).

The rubber composition in the present invention usually contains sulfur. For higher steering response, the amount of sulfur per 100 parts by mass of the rubber component is preferably not less than 4.0 parts by mass, more preferably not less than 5.0 parts by mass. In view of blooming of sulfur or adhesion, and durability, the amount of sulfur is preferably not more than 8.0 parts by mass, more preferably not more than 7.0 parts by mass, still more preferably not more than 6.0 parts by mass.

The amount of sulfur refers to the net sulfur content, and in the case of insoluble sulfur it means the amount of sulfur excluding oil (sulfur content).

In order to prevent blooming of sulfur and an accompanying reduction in the adhesion of the extrudate, the zinc oxide is preferably incorporated in an amount of 7 to 16 parts by mass per 100 parts by mass of the rubber component, although depending on the sulfur component content. When the amount of zinc oxide falls within the above range, better processability and better adhesion can be obtained.

The ratio of the amount of zinc oxide to the amount of insoluble sulfur depends on how thin the extrudate is rolled at high temperature during extrusion. A higher ratio increases the difficulty of blooming of sulfur during processing. For use in bead apexes, for example, the ratio of the amount of zinc oxide to the amount of insoluble sulfur (zinc oxide/insoluble sulfur) is preferably not less than 1.0, more preferably not less than 1.15.

The rubber composition in the present invention usually contains a vulcanization accelerator.

Examples of the vulcanization accelerator include guanidine compounds, aldehyde-amine compounds, aldehyde-ammonia compounds, thiazole compounds, sulfenamide compounds, thiourea compounds, thiuram compounds, dithiocarbamate compounds, and xanthate compounds. These vulcanization accelerators may be used alone or in combinations of two or more. Preferred among these in view of dispersibility in rubber and stability of vulcanizate properties are sulfenamide vulcanization accelerators such as N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), or N,N-diisopropyl-2-benzothiazole sulfenamide; N-tert-butyl-2-benzothiazolylsulfenimide (TBSI); and di-2-benzothiazolyl disulfide (DM). More preferred are TBBS, DCBS, TBSI, and DM, with TBBS or TBSI being still more preferred.

The amount of vulcanization accelerator per 100 parts by mass of the rubber component is preferably not less than 1.5 parts by mass, more preferably not less than 2.0 parts mass, but preferably not more than 6.0 parts by mass, more preferably not more than 4.0 parts by mass, still more preferably not more than 3.5 parts by mass, particularly preferably not more than 3.0 parts by mass, most preferably not more than 2.8 pars by mass. When the amount falls within the above-described range, a high-level balanced improvement in steering response, fuel economy, durability, and extrusion processability can be achieved.

Commonly known methods can be employed to prepare the rubber composition in the present invention. For example, the rubber composition may be prepared by kneading the components described above using a rubber kneading machine such as an open roll mill or a Banbury mixer, and vulcanizing the mixture.

When a press vulcanizate is obtained by press-vulcanizing the rubber composition in the present invention at 170°C for 12 minutes, the press vulcanizate preferably has a tan δ at 70 °C of not more than 0.10. Such a tan δ range of the press vulcanizate is considered to indicate a sufficient reduction in tan δ leading to good steering response and good fuel economy. The tan δ at 70 °C of the press vulcanizate is more preferably not more than 0.09, still more preferably not more than 0.08, particularly preferably not more than 0.075.

The pneumatic tire of the present invention can be formed from the rubber composition by usual methods. Specifically, as described above, the above components are kneaded using a rubber kneading machine such as an open roll mill or a Banbury mixer to prepare a rubber composition. The unvulcanized rubber composition is extruded into the shape of a component used as an inner layer of a tire, and formed in a usual manner and assembled with other tire components on a tire building machine to build an unvulcanized tire. The unvulcanized tire is heated and pressurized in a vulcanizer to produce a tire. Thus, a tire including a tire inner layer that incorporates the above-described components is obtained.

The tire inner layer is preferably at least one component selected from the group consisting of a bead apex, an innerliner, a bead inner layer, and an inner sidewall layer.

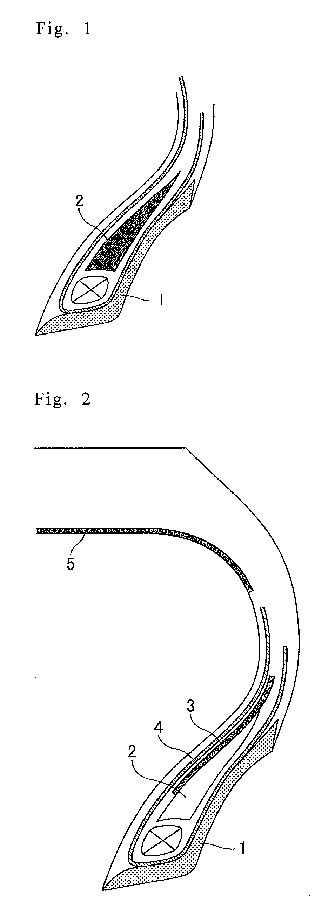

The bead apex refers to a component placed between the carcass ply or plies and the turnup carcass ply or plies, and extending toward the tire sidewall. Specifically, the bead apex is a component illustrated in, for example, Fig. 1 of JP 2009-001681 A.

The innerliner refers to a component forming a tire inner cavity surface. This component can be used to reduce air permeation to maintain the tire internal pressure. Specifically, the innerliner is a component illustrated in, for example, Fig. 1 of JP 2008-291091 A, or Figs. 1 and 2 of JP 2007-160980 A.

The bead inner layer is the collective term for components, excluding the bead apex, located in the bead portion between the clinch apex and the innerliner. Examples of such a bead inner layer include a strip apex, an outer apex between the clinch apex and the carcass, a turnup rubber strip, and an inner clinch apex layer.

The strip apex refers to a component between the ply rubber and the bead apex, a component between the innerliner and the ply rubber, or a component between the bead apex and the turnup ply or plies, as illustrated in the exemplary schematic cross-sections of tires in Figs. 2 to 4.

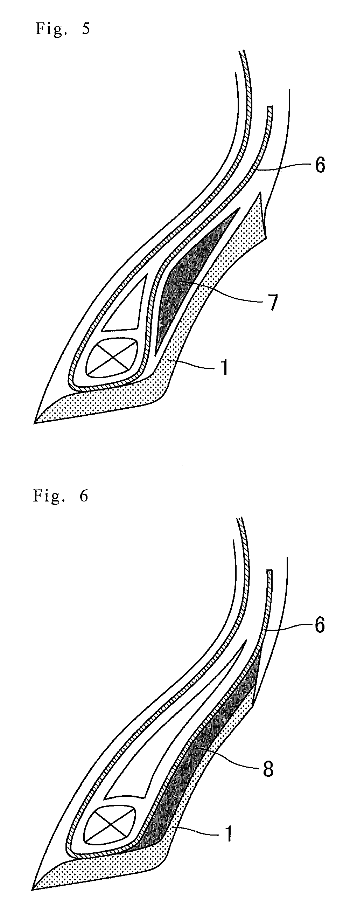

The outer apex between the clinch apex and the carcass refers to a component between the turnup ply or plies and the clinch apex, as illustrated in the exemplary schematic cross-section of a tire in Fig. 5.

The inner clinch apex layer refers to a layer of a two or more layered clinch apex, excluding the outermost clinch apex layer (referred to simply as "clinch apex"). In the case of a two-layered clinch apex, for example, the inner clinch apex layer is a component located inside of a clinch apex 1 (an inner clinch apex layer 8), as illustrated in the exemplary schematic cross-section of a tire in Fig. 6.

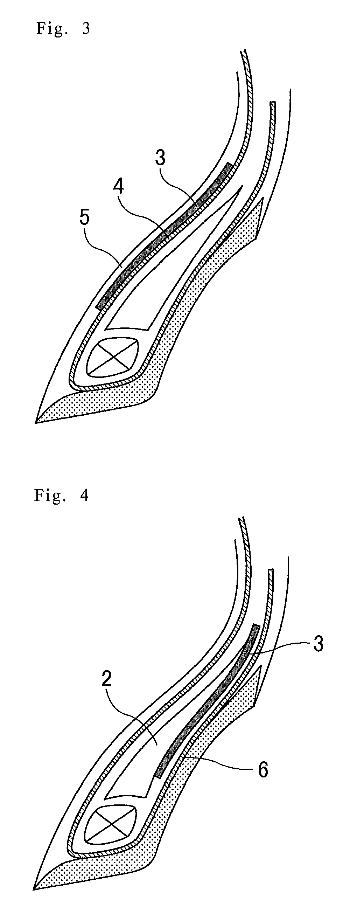

The strip apex 3 or axially-outer (molded) strip shown in the exemplary schematic cross-section of a tire in Fig. 4 may also be referred to as a turnup rubber strip. The outer apex 7 between the clinch apex and the carcass as shown in the exemplary schematic cross-section of a tire in Fig. 5 may also be referred to as a rubber strip to be attached to the turnup ply or plies.

The inner sidewall layer is, for example, an inner sidewall illustrated in Fig. 1 of JP 2005-271857 A.

The pneumatic tire of the present invention can be used for passenger vehicles, heavy-load vehicles, motocross vehicles, and the like, and in particular can be suitably used for motocross vehicles.

### EXAMPLES

The following will illustrate the present invention specifically with reference to examples, but the present invention is not limited thereto.

The chemicals used in the examples and comparative examples are collectively listed below.
<NR>: TSR20
<BR 1>: VCR617 (SPB-containing high-cis BR, SPB content: 17% by mass, melting point of SPB: 200°C, amount of boiling n-hexane-insoluble matter: 15% to 18% by mass, cis content: 98% by mass) available from Ube Industries, Ltd.
<BR 2>: BR150B (high-cis BR, cis content: 97% by mass) available from Ube Industries, Ltd.
<SBR>: Emulsion-polymerized SBR (E-SBR) 1502 (styrene content: 23.5% by mass) available from JSR Corp.
<Carbon black>: see Table 1
<Calcium carbonate>: TANCAL 200 (average particle size: 7.0 µm, Mohs hardness: 3) available from Takehara Kagaku Kogyo Co., Ltd.
<Hard clay>: Crown Clay (average particle size: 0.6 µm, Mohs hardness: 1.5) available from Southeastern Clay Co.
<Talc>: Mistron Vapor (average particle size: 5.5 µm, Mohs hardness: 1) available from Nihon Mistron Co., Ltd.
<Mica>: Mica S-200HG (phlogopite, average particle size: 50 µm, Mohs hardness: 2.5) available from Repco Inc.
<Austin black>: Austin black (carbon content: 77% by mass, oil content: 17% by mass, average particle size: 5 µm, Mohs hardness: 1) available from Coal Fillers
<Silica>: Z115Gr (Mohs hardness: 7) available from Rhodia
<Alkylphenol resin>: SP1068 (a non-reactive alkylphenol resin represented by the formula (3) where q = an integer of 1 to 10 and R⁴ = an octyl group) available from Nippon Shokubai Co., Ltd.
<TDAE oil>: VivaTec 400 available from H&R
<Stearic acid>: Product of NOF Corporation
<Zinc oxide>: Product of Mitsui Mining & Smelting Co., Ltd.
<Tackirol V200>: Tackirol V200 (an alkylphenol-sulfur chloride condensate represented by the formula (1) where m = 0 to 100, x, y = 2, and R¹ to R³ = C₈H₁₇ (octyl group), sulfur content: 24% by mass, Mw: 9,000, softening point: 105°C) available from Taoka Chemical Co., Ltd.
<TS3108>: TS3108 (an alkylphenol-sulfur chloride condensate represented by the formula (1) where m = 0 to 100, x, y = 2, and R¹ to R³ = C₈H₁₇ (octyl group), sulfur content: 27% by mass, Mw: 13, 000, softening point: 128°C) available from Taoka Chemical Co., Ltd.
<Vultac 3>: Vultac 3 (an alkylphenol-sulfur chloride condensate represented by the formula (1) where m = 0 to 100, x, y = 2, and R¹ to R³ = C₅H₁₁, sulfur content: 21% by mass, Mw: 8,000, softening point: 110°C) available from Arkema
<Sulfur>: CRYSTEX HS OT20 (insoluble sulfur containing 80% by mass of sulfur and 20% by mass of oil) available from FLEXSYS
<Vulcanization accelerator TBBS>: Nocceler NS (N-tert-butyl-2-benzothiazolylsulfenamide) available from Ouchi Shinko Chemical Industrial Co., Ltd.
<CTP>: N-cyclohexylthio-phthalamide (CTP) available from Ouchi Shinko Chemical Industrial Co., Ltd.
<Reactive phenolic resin>: PR12686 (a cashew oil-modified phenol resin represented by the formula (2)) available from Sumitomo Bakelite Co., Ltd.
<HMT (curing agent)>: Nocceler H (hexamethylenetetramine) available from Ouchi Shinko Chemical Industrial Co., Ltd.

**[Table 1]**

| | | COAN (ml/100g) | BET (N₂SA) (m²/g) |
|---|---|---|---|
| Carbon black 1 | Statex N 762 available from Columbian Chemicals | 59 | 29 |
| Carbon black 2 | EB247 available from Evonik | 102 | 42 |
| Carbon black 3 | N550 available from Cabot Japan K.K. | 78 | 42 |
| Carbon black 4 | N330 available from Columbian Chemicals | 88 | 78 |
| Carbon black 5 | N234 available from Cabot Japan K.K. | 102 | 119 |
| Carbon black 6 | N121 available from Columbian Chemicals | 111 | 122 |

### <Examples and Comparative Examples>

The compounding materials in formulation amounts shown in Table 2, except the sulfur, vulcanization accelerator, and alkylphenol-sulfur chloride condensate, were kneaded in a 1. 7-L Banbury mixer for five minutes until the discharge temperature reached 170°C to give a kneaded mixture. Next, the sulfur, vulcanization accelerator, and alkylphenol-sulfur chloride condensate were added to the kneaded mixture and they were kneaded with an open two-roll mill for four minutes until the temperature reached 105°C to give an unvulcanized rubber composition.

The unvulcanized rubber composition was press-vulcanized in a 2-mm-thick die at 170°C for 12 minutes to give a vulcanized rubber composition.

Separately, the unvulcanized rubber composition was formed into the shape of a bead apex and assembled with other tire components to build an unvulcanized tire, followed by press vulcanization at 170°C for 12 minutes to prepare a tire for sport utility vehicles (SUV tire, size: P265/65R17 110S).

The SUV tires thus prepared were mounted on an SUV (displacement: 3500 cc), and the vehicle was driven for break-in for about one hour on a test course of running mode with circuit, zigzag and circumference roads.

The unvulcanized rubber compositions, vulcanized rubber compositions, and SUV tires (new; and after break-in) were evaluated as follows. Table 2 shows the results.

### (Viscoelasticity test)

The complex elastic modulus (E*) and the loss tangent (tan δ) of the vulcanized rubber compositions were measured using a viscoelasticity spectrometer VES (available from Iwamoto Seisakusho Co., Ltd.) at a temperature of 70°C, a frequency of 10 Hz, an initial strain of 10%, and a dynamic strain of 2%. An E* value within the target range indicates better steering response, and a smaller tan δ value indicates better fuel economy.

### (Steering response)

Each vehicle was driven on a dry asphalt test course with a road surface temperature of 25°C, and the handling stability (response of the vehicle to a minute change in steering angle) during the driving was subjectively evaluated on a six-point scale by a test driver. A higher rating indicates better steering response. The rating of "6-" means a level slightly lower than the rating of "6", but higher than the rating of "5".

### (Tensile test)

No. 3 dumbbell-shaped test pieces prepared from each vulcanized rubber composition were subjected to a tensile test at room temperature according to JIS K 6251 "Rubber, vulcanized or thermoplastic -- Determination of tensile stress-strain properties, " to measure the elongation at break EB (%). A larger EB value indicates better elongation at break (durability).

### (Index of straightness of extrudate)

Each unvulcanized rubber composition was extruded using a molding extruder. The extruded unvulcanized rubber composition was formed into a predetermined bead apex shape, and the formed product was evaluated for edge warpage by visual observation. The warpage evaluation was based on a five-point scale (1-5), where a rating of 5 indicates least warpage (i.e. perpendicular to the bead wires), and a rating of 1 indicates greatest warpage. The ratings are expressed as an index, with Comparative Example 1 set equal to 100. Thus, a higher index indicates better extrusion processability.

### (Shrinkage index)

Each unvulcanized rubber composition was extruded using a molding extruder. The extruded unvulcanized rubber composition was formed into a predetermined bead apex shape. After 6 hours from the end of extrusion, the formed product was evaluated for shrinkage by visually observing the presence or absence of uneven shrinkage. The shrinkage evaluation was based on a five-point scale (1-5), where a rating of 5 indicates an even product with least shrinkage, and a rating of 1 indicates a most uneven product. The ratings are expressed as an index, with Comparative Example 1 set equal to 100. Thus, a higher index indicates better extrusion processability.

### (Adhesion index)

Each unvulcanized rubber composition was extruded and formed into a bead apex, and the formed product was subjectively evaluated for adhesion between the rubber surface of the formed product and a tire carcass cord-topping rubber (both adhesion and flatness) by a builder. The results are expressed as an index, with Comparative Example 1 set equal to 100. A higher adhesion index indicates higher adhesion between the carcass and the bead apex and better building processability, whereas a lower adhesion index leads to separation between the carcass and the bead apex or occurrence of trapped air.

The adhesion usually depends on factors such as the extrusion temperature of the formed product (self-heating temperature), the type and amount of a tackifying resin, and the type and amount of a rubber component.

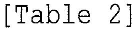

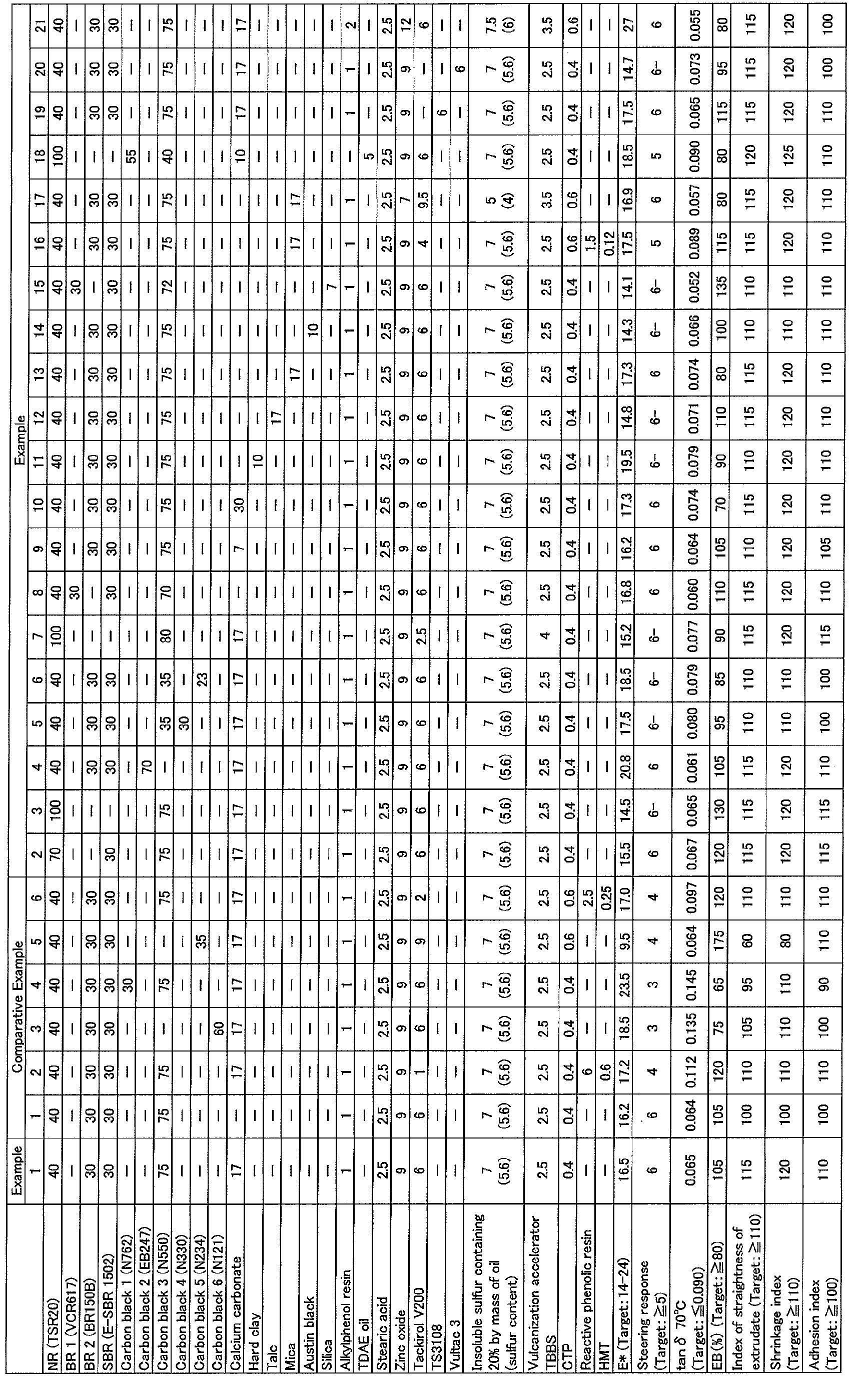

In examples incorporating specific amounts of a carbon black having a certain BET specific surface area and an alkylphenol-sulfur chloride condensate, but incorporating only a specific amount or less of a low reinforcing inorganic filler, and only less than a specific amount of a reactive phenolic resin, a moderate E* value, a tan δ value of not more than 0.10, a good elongation at break EB value, and good processability were exhibited. Thus, a balanced improvement in steering response, fuel economy, durability, and extrusion processability was achieved. In particular, the examples with both an E* value of not less than 15 and a tan δ value of not more than 0.075 were found to have particularly excellent steering response with a steering response rating of 6.

### REFERENCE SIGNS LIST

- 1:: Clinch apex
- 2:: Bead apex
- 3:: Strip apex
- 4:: Ply rubber
- 5:: Innerliner
- 6:: Turnup ply or plies
- 7:: Outer apex between clinch apex and carcass
- 8:: Inner clinch apex layer

## Claims

1. A pneumatic tire, comprising a tire inner layer,
the tire inner layer comprising a rubber composition that contains a rubber component, a carbon black, and an alkylphenol-sulfur chloride condensate,
the carbon black having a BET specific surface area of 20 to 120 m²/g,
the rubber composition containing, per 100 parts by mass of the rubber component, 40 to 100 parts by mass of the carbon black and 2.5 to 10 parts by mass of the alkylphenol-sulfur chloride condensate,
the rubber composition having an amount of low reinforcing inorganic filler of not more than 40 parts by mass per 100 parts by mass of the rubber component and an amount of reactive phenolic resin of less than 2.0 parts by mass per 100 parts by mass of the rubber component.

2. The pneumatic tire according to claim 1,
wherein the low reinforcing inorganic filler has an average particle size of not more than 50 µm.

3. The pneumatic tire according to claim 1 or 2,
wherein the rubber composition contains 3.0 to 8.0 parts by mass of the alkylphenol-sulfur chloride condensate per 100 parts by mass of the rubber component.

4. The pneumatic tire according to any one of claims 1 to 3,
wherein the low reinforcing inorganic filler is at least one selected from the group consisting of calcium carbonate, hard clay, and talc.

5. The pneumatic tire according to any one of claims 1 to 4,
wherein a press vulcanizate obtained by press-vulcanizing the rubber composition at 170°C for 12 minutes has a tan δ at 70°C of not more than 0.10.

6. The pneumatic tire according to any one of claims 1 to 5,
wherein the carbon black has a BET specific surface area of 30 to 80 m²/g.

7. The pneumatic tire according to any one of claims 1 to 6,
wherein the rubber composition contains 70 to 90 parts by mass of the carbon black per 100 parts by mass of the rubber component.

8. The pneumatic tire according to any one of claims 1 to 7,
wherein the tire inner layer is at least one component selected from the group consisting of a bead apex, an innerliner, a bead inner layer, and an inner sidewall layer.

## Amended claims

### Amended claims under Art. 19.1 PCT

**1.** (Amended) A pneumatic tire, comprising a tire inner layer, the tire inner layer comprising a rubber composition that contains a rubber component, a carbon black, and an alkylphenol-sulfur chloride condensate,
the carbon black having a BET specific surface area of 20 to 120 m²/g,
the rubber composition containing, per 100 parts by mass of the rubber component, 70 to 90 parts by mass of the carbon black and 2.5 to 10 parts by mass of the alkylphenol-sulfur chloride condensate,
the rubber composition having an amount of low reinforcing inorganic filler of not more than 40 parts by mass per 100 parts by mass of the rubber component and an amount of reactive phenolic resin of less than 2.0 parts by mass per 100 parts by mass of the rubber component.

**2.** The pneumatic tire according to claim 1,
wherein the low reinforcing inorganic filler has an average particle size of not more than 50 µm.

**3.** The pneumatic tire according to claim 1 or 2,
wherein the rubber composition contains 3.0 to 8.0 parts by mass of the alkylphenol-sulfur chloride condensate per 100 parts by mass of the rubber component.

**4.** The pneumatic tire according to any one of claims 1 to 3,
wherein the low reinforcing inorganic filler is at least one selected from the group consisting of calcium carbonate, hard clay, and talc.

**5.** The pneumatic tire according to any one of claims 1 to 4,
wherein a press vulcanizate obtained by press-vulcanizing the rubber composition at 170°C for 12 minutes has a tan δ at 70°C of not more than 0.10.

**6.** The pneumatic tire according to any one of claims 1 to 5,
wherein the carbon black has a BET specific surface area of 30 to 80 m²/g.

**7.** Cancelled)

**8.** (Amended) The pneumatic tire according to any one of claims 1 to 6,
wherein the tire inner layer is at least one component selected from the group consisting of a bead apex, an innerliner, a bead inner layer, and an inner sidewall layer.

Statement under Art. 19.1 PCT
Claim 1 has been amended based on original claim 7.

Claim 7 is cancelled.

Claim 8 has been amended to change its dependency as a result of the cancellation of claim 7.
